# EUROPEAN PATENT APPLICATION

(11) **EP 2 700 811 A1**
(43) Date of publication of application: **26.02.2014**
(21) Application number: 12181491.7
(22) Date of filing: 23.08.2012
(51) Int. Cl.: F03D 1/00

(54) **A device for repairing a wind turbine blade**

(71) Applicant: Siemens Aktiengesellschaft, 80333 München (DE)
(72) Inventor: Stege, Jason, 7330 Brande (DK)

(57) **Abstract**

A device (2) for repairing a wind turbine blade (1), comprising: a mounting frame (3), a 3-axis CNC router (7, 10) being contained in the mounting frame (3), a scanner (8) for scanning the surface of the wind turbine blade, and a controller (9) for calculating and controlling a milling operation of the CNC router (7, 10).

## Description

The invention relates to a device for repairing a wind turbine blade.

When turbine blades are repaired and retrofitted it is preferable due to costs and time constrains not to remove them from the wind turbine. Typically a technician in rope harness carries out the repair work. As an alternative a wired platform can be used that does not require a crane. The use of a crane for a basket or the removal of the wind turbine blade is the most expensive method and this is amplified offshore with the need for a jackup rig.

Rope technicians can quickly handle small repairs to the tip of a wind turbine blade, but a larger or more complex repair requires the blade to come down to the ground. For this reason a more complicated serial retrofit would also require the blade to come down. The offshore costs of such a retrofit are immense. A jackup rig can cost a six-figure amount per day just for the equipment and a blade swap takes two hours per blade.

It therefore an object of the present invention to provide a device for repairing a wind turbine blade which allows a complex repair without removing the blade.

According to the present invention this object is achieved in the above defined device in that the device comprises a mounting frame, a 3-axis CNC router being contained in the mounting frame, a scanner for scanning the surface of the turbine blade, and a controller for calculating and controlling a milling operation of the CNC router.

The present invention is based on the idea that a precise repair can be carried out by using a mounting frame being equipped with a CNC router so that a milling operation can be carried out automatically under control of a controller. The inventive device can be lifted by a mounting system which can be positioned by a rope technician. The mounting system is able to lift and attach the mounting frame together with the CNC router and the scanner. Subsequently the scanner can scan the surface of the wind turbine blade and a milling operation can be initiated under control of the controller.

The controller can calculate any offset of the surface of the wind turbine blade which is required and start milling whatever 3D shape is required. Using the inventive device the entire tip of the wind turbine blade can be reshaped, a damaged portion can be removed or ground into a connector for a tip extension. Depending on the size of the mounting frame not only the tip but also other portions of the wind turbine blades can be repaired and/or reshaped.

According to the invention it can be envisaged that the scanner comprises a pressure sensitive probe. By using the probe a digital image of the surface can be generated.

The mounting frame of the inventive device may comprise a transverse bracket on which the CNC router is disposed, whereby the transverse bracket is movable along an axis of the mounting frame. Accordingly the transverse bracket is movable along the longitudinal axis of the wind turbine blade.

It is preferred that the transverse bracket is movable along guide rails. Guide rails can be provided on both sides of the mounting frame so that the transverse bracket can move along the guide rails.

According to the invention it is preferred that two 3-axis CNC routers are provided facing each other. By using two separate routers the upper surface and the lower surface of the wind turbine blade can be milled at the same time. Consequently it is sufficient that the router moves once over the surface of a wind turbine blade or its tip. However, other embodiments are possible where two CNC routers are used which can be moved independently from each other.

In the inventive device it is preferred that the at least one CNC router is movable in a transverse direction, namely along the transverse bracket. The router or a tool of the router can be moved in a third, perpendicular direction towards the surface of the wind turbine blade.

Further the invention relates to a method for repairing a wind turbine blade.

The inventive method comprises the following steps: positioning a mounting frame comprising a 3-axis CNC router on the wind turbine blade, scanning the surface of the wind turbine blade with a scanner attached to the mounting frame, calculating and controlling a milling operation of the router, and performing a milling operation.

The invention and its underlying principle will be better understood when consideration is given to the following detailed description of preferred embodiments.

In the accompanying drawings:
- fig. 1: shows a wind turbine blade and the inventive device which is lifted to the wind turbine blade;
- fig. 2: shows the inventive device being attached to the blade tip;
- fig. 3: is a similar view as fig. 2;
- fig. 4: shows the inventive device attached to a blade tip in a perspective view;
- fig. 5: is a longitudinal view of the attached inventive device, and
- fig. 6: shows the routers in operation.

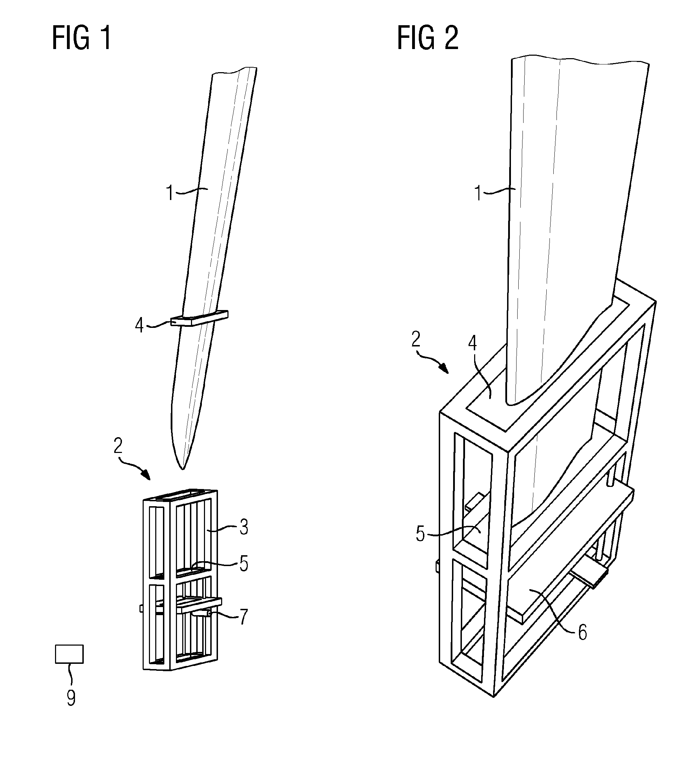

Fig. 1 shows a wind turbine blade 1 and a device 2 for repairing the wind turbine blade 1. The device 2 comprises a mounting frame 3 having a prismatic shape. Fig. 1 shows the situation when the mounting frame 3 is lifted so that it can be clamped to the blade 1 as shown in fig. 2. The mounting frame 3 is provided with profiled supports 4, 5 which are adapted to the airfoil of the wind turbine blade 1. When the mounting frame 3 has reached the desired position it is clamped to the wind turbine blade 1.

The mounting frame 3 which is shown in fig. 2 is used for repairs of the tip of a wind turbine blade. Other embodiments are possible with a larger mounting frame 3 which can be used for repairing other parts of a blade.

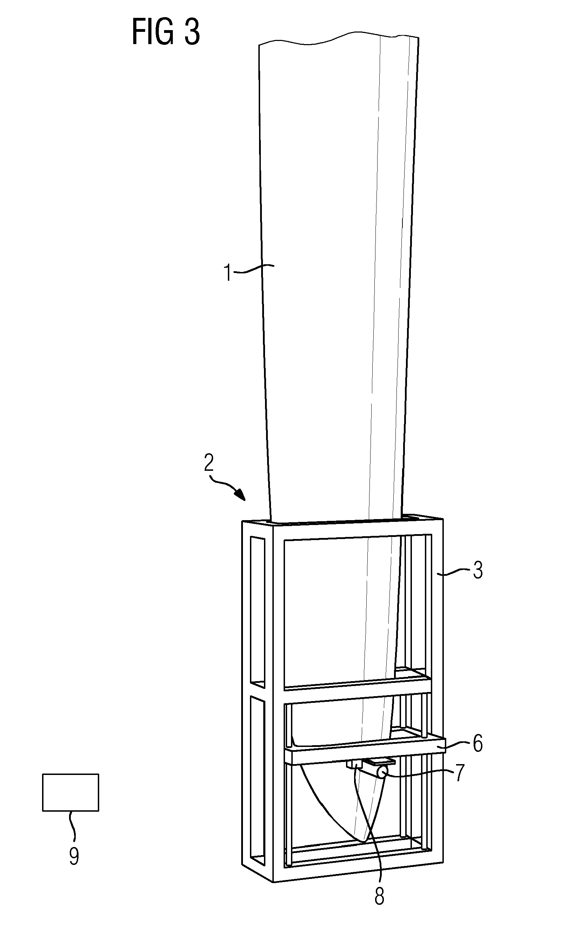

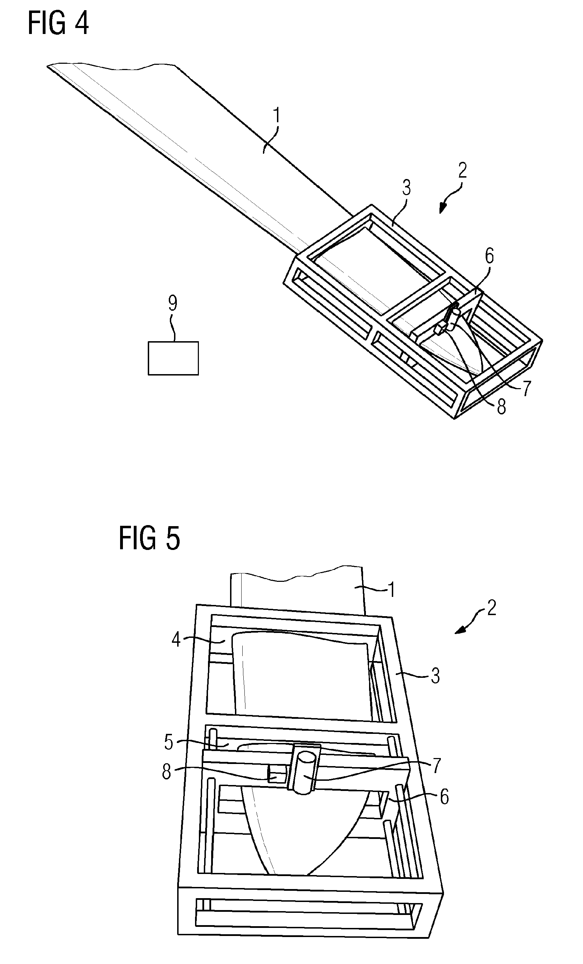

Fig. 3 shows the mounting frame 3 in a fixed position. The mounting frame 3 comprises a transverse bracket 6 which is movable in longitudinal direction of the mounting frame 3 and the wind turbine blade 1 along guide rails. On the transverse bracket 6 a 3-axis CNC router 7 is fixed for performing a milling operation. Further a scanner 8 which is only schematically depicted is attached to the transverse bracket 6. Accordingly router 7 and scanner 8 can be moved in three perpendicular directions. The scanner 8 can scan the surface of the wind turbine blade 1 and create a digital three dimensional image of the surface of the wind turbine blade 1. This image can be used for determining which regions of the surface of the wind turbine blade 1 need a repair. A controller 9 is provided for calculating and controlling the milling operation of the CNC router 7. The controller 9 can be attached to the mounting frame 3 or as an alternative be positioned at a remote location, e.g. on the ground. Fig. 4 and 5 show the mounting frame 3 with the router 7 during milling. Using this method the entire tip can be reshaped, a damaged portion can be removed and ground into a connector for a tip extension. The milling operation is carried out automatically under control of the controller 9.

As an example the device 2 can be used for repairing a heavily lightning damaged tip of a wind turbine blade where there is not enough material to repair with end methods. The surface of the damaged tip can be removed by the milling operation and a new precast tip can be glued in place with the lightning system included. Using this method a severely damaged tip can be replaced at low costs. For attaching a completely new blade tip the system can mill the precise mounting shape for the new component to be attached resulting in a precised fit every time. The mounting frame 3 can be used as a guide to lift, align and clamp a piece for attachment to the blade.

The mounting frame 3 is also useful in serial modifications to a blade tip on the ground. The mounting system for a new blade tip can be quickly milled on a new blade without the need for a complex positioning system or extensive shields.

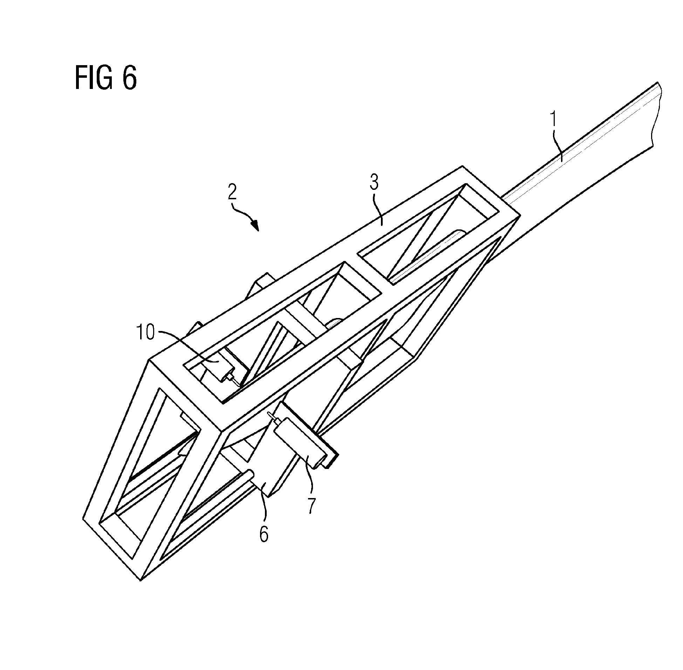

Fig. 6 shows an embodiment where the mounting frame is provided with two routers 7, 10 facing each other so that the lower and upper surfaces of the wind turbine blade 1 can be milled at the same time.

Accordingly a complex tip repair is possible without removing the blade, a high precision restoration of the aerodynamic surfaces is possible, the device allows for a precise serial modification of a blade tip without the costs of taking the blade down, further it allows for a precise serial modification on the ground without the need for expensive equipment or a special environment.

Although the present invention has been described in detail with reference to the preferred embodiment, the present invention is not limited by the disclosed examples from which the skilled person is able to derive other variations without departing from the scope of the invention.

## Claims

1. A device (2) for repairing a wind turbine blade (1), comprising:
- a mounting frame (3),
- a 3-axis CNC router (7, 10) being contained in the mounting frame (3),
- a scanner (8) for scanning the surface of the wind turbine blade, and
- a controller (9) for calculating and controlling a milling operation of the CNC router (7, 10).

2. A device according to claim 1, **characterized in that** the scanner (8) comprises a pressure sensitive probe.

3. A device according to claim 1 or 2, **characterized in that** the mounting frame (3) comprises a transverse bracket (6) on which the CNC router (7) is disposed, whereby the transverse bracket (6) is movable along an axis of the mounting frame (3).

4. A device according to claim 3, **characterized in that** the transverse bracket (6) is movable along guide rails.

5. A device according to claim 3 or 4, **characterized in that** the CNC router (7, 10) is movable along the longitudinal axis of the transverse bracket (6).

6. A device according to any of claims 3 to 5, **characterized in that** two 3-axis CNC routers (7, 10) are provided facing each other.

7. A method for repairing a wind turbine blade, comprising the following steps:
- positioning a mounting frame (3) comprising a 3-axis CNC router (7, 10) on the wind turbine blade (1),
- scanning the surface of the wind turbine blade (1) with a scanner (8) attached to the mounting frame (3),
- calculating and controlling a milling operation of the router (7, 10),
- performing a milling operation.

8. A method according to claim 7, **characterized in that** two CNC routers (7, 10) are used facing each other.

9. A method according to claim 7 or 8, **characterized in that** the milling operation is controlled by a controller (9).
